# EUROPEAN PATENT APPLICATION

(11) **EP 4 654 101 A1**
(43) Date of publication of application: **26.11.2025**
(21) Application number: 24177378.7
(22) Date of filing: 22.05.2024
(51) Int. Cl.: G06Q 10/0631, G06N 3/0475, G06N 5/022, G06N 20/00, G06Q 10/0639, G06Q 50/06, G06F 8/10, G06F 40/30

(54) **EPC-DATA-PROCESSING-BRAIN - ONTOLOGY-ENHANCED AUTONOMOUS AGENT AND MIXTURE-OF-EXPERTS SYSTEM FOR ORCHESTRATION OF DATA PROCESSING IN P&A-ENGINEERING**

(71) Applicant: ABB SCHWEIZ AG, 5400 Baden (CH)
(72) Inventor: SCHOCH, Nicolai, 69120 Heidelberg (DE); STREM, Nika, 68163 Mannheim (DE); HOERNICKE, Mario, 76829 Landau (DE); STARK, Katharina, 69469 Weinheim (DE)
(74) Representative: Maiwald GmbH

(57) **Abstract**

There is disclosed a method for comprehensive engineering data processing in industrial plant. The method comprises providing to a large language model-based, LLM-based, autonomous agent access to domain knowledge representation associated with one engineering project. The method comprises applying the LLM-based autonomous agent provided with the access to orchestrate by the LLM-based autonomous agent at least the following based on and/or in alignment with the domain knowledge representation: obtaining first data indicative of engineering data associated with the one engineering project; based on one or more types of information provided in the engineering data and/or based on a type of the one engineering project, selecting one or more processing tools for processing the first data; applying the selected one or more processing tools on the first data; based on the applying, obtaining second data indicative of one or more intermediate results from a processing of the first data by the selected one or more processing tools; comprehensively analysing the second data based on checking for contradictions and/or optimisation potential among the second data; and based on a result of the comprehensively analysing, obtaining third data indicative of a structured representation of the first data.

## Description

### FIELD OF THE INVENTION

The invention relates to a EPC-Data-Processing-Brain. In particular, the invention relates to an Ontology-enhanced Autonomous Agent and Mixture-of-Experts System for (Orchestration of) Data Processing in P&A-Engineering.

### BACKGROUND

To date, human engineering experts need to manually process data from EPC customers, like for example piping & instrumentation diagrams (P&IDs), Control Narratives (CNs), input/output lists (IO Lists) or Tag Lists, Single line diagrams, functional descriptions, logic diagrams, motor and consumer lists, and instrumentation lists, in order to obtain from them insights and representations that are then suitable for further steps in the process and automation engineering (P&AEng) workflows and that are usable using the existing P&AEng tools.

If this was automated, this would save not only lots of human efforts, but also possibly allow to reduce errors in processing the data one-by-one and thereby leaving unconsidered other parts of the data.

In order to automatically process the unstructured data, AI/ML models are very likely the best choice. Accordingly, there is a strong state of the art with respect to specific expert models for data processing, like for example object detection models for P&IDs and text extraction models for control narratives. Many of them are already today based on the transformer architecture.

However, processing single engineering project data one-by-one does not yield the full picture, and a lot of information would be lost or left unconsidered, if the data is not processed in its entirety, i.e., for example, the project's P&ID data along with the same project's Control Narratives (CNs) and IO Lists.

Hence, there are several drawbacks available regarding the processing of single engineering project data.

### SUMMARY

In view of the above, it is an object of the present disclosure to overcome at least part of the drawbacks available regarding the processing of single engineering project data.

Therefore, to address one or more of these drawbacks, there is provided, in a first aspect, a method for comprehensive engineering data processing in industrial plant. The method comprises providing to a large language model-based, LLM-based, autonomous agent access to domain knowledge representation associated with one engineering project. The method further comprises applying the LLM-based autonomous agent provided with the access to orchestrate by the LLM-based autonomous agent at least the following based on and/or in alignment with the domain knowledge representation: Obtaining first data indicative of engineering data associated with the one engineering project. Based on one or more types of information provided in the engineering data and/or based on a type of the one engineering project, selecting one or more processing tools for processing the first data; applying the selected one or more processing tools on the first data. Based on the applying, obtaining second data indicative of one or more intermediate results from a processing of the first data by the selected one or more processing tools. Comprehensively analysing the second data based on checking for contradictions and/or optimisation potential among the second data. And based on a result of the comprehensively analysing, obtaining third data indicative of a structured representation of the first data.

The method of the first aspect may be computer implemented.

The comprehensively analysing the second data may comprise comprehensively analysing the first data and the second data based on checking for contradictions and/or optimisation potential among the second data.

It shall be noted that by domain knowledge representation it may be meant a structured, formal representation of a domain of interest (e.g., the P&AEng domain) defining the relevant concepts/things and their attributes/features and their (inter-) relations or dependencies as well as relevant governing rules or axioms. A such domain knowledge representation can be as simple as a vocabulary (i.e. a list of the concepts/things in the domain), a taxonomy, or even a more mature ontology, or other kinds of domain information models (as suitable for the domain).

Further, by orchestrate it may be meant that a sequence of subsequent and/or parallel actions (executed by software(s)) is coordinated. Thus, by orchestrate it may be meant that subsequent and/or parallel actions (executed by software(s)) are coordinated. Obtaining first data may also comprise obtaining the engineering data. Obtaining second data may also comprise obtaining the intermediate results. Comprehensively analysing may also be understood as jointly analysing for example. Obtaining third data may also comprise obtaining the structured representation.

The method according to the first aspect is advantageous in that it may participate in enabling to process an entire set of data from a respective engineering project in order to obtain a comprehensive and consistent output of all contained information, just as a human engineering expert would do. Hence, the method takes into consideration the outputs from different expert models, like for example from one for images like P&IDs and from one for text like CNs, and combines them into one bigger context, while having access to and staying consistent with suitable underlying expert domain knowledge representation.

According to several examples of the present disclosure, the engineering data may be first engineering data provided in a first data file. The first data may be further indicative of second engineering data provided in a second data file. The second engineering data may be associated with the same one engineering project as the first engineering data. The selecting may comprise selecting one or more processing tools for processing the first data based on at least one of:
- a data type of the first data file,
- a data type of the second data file,
- one or more types of information provided in the first engineering data,
- one or more types of information provided in the second engineering data, and
- a type of the same one engineering project.

Hence comprehensive processing is enabled. Thus, more adequate, more reliable and more accurate intermediate results and/or structured representations may be obtained.

According to several examples of the present disclosure the type of the one engineering project may comprise at least one of: mining, oil and gas, food and beverages, and chemicals and refining. The one or more types of information comprises at least one of: a text, a table, an image, and time series data. The data type may comprise at least one of: a proprietary format, a user-specific format, a PDF-file, an XML-file, a JSON-file, and a JPG-file.

Hence comprehensive processing is further enabled. Thus, more adequate, more reliable, and more accurate intermediate results and/or structured representations may be obtained.

According to several examples of the present disclosure, the selecting the one or more processing tools may comprise selecting the one or more processing tools from among preselected processing tools. Additionally or alternatively, the selecting the one or more processing tools may be further based on obtaining application and compatibility information about the preselected processing tools. Additionally or alternatively, the selecting the one or more processing tools may further comprise configuring a selected processing tool according to the one or more types of information provided in the first and/or second engineering data and/or according to the type of the one engineering project.

Hence a more adequate, more specified and more individual processing is enabled. Thus, more adequate, more reliable and more accurate intermediate results and/or structured representations may be obtained.

According to several examples of the present disclosure, the applying the selected one or more processing tools on the first data may comprises applying at least one of the selected one or more processing tools on at least one of the first engineering data and the second engineering data. The applying may be based on at least one of
- a type of information provided in the first engineering data,
- a data type of the first data file,
- a type of information provided in the second engineering data,
- a data type of the second data file, and
- a type of the one engineering project.

Hence a more adequate, more specified and more individual processing is further enabled. Thus, more adequate, more reliable and more accurate intermediate results and/or structured representations may be obtained.

According to several examples of the present disclosure, the obtaining the second data may comprise obtaining one or more first intermediate results from the processing of the first engineering data by at least one of the one or more selected processing tools, obtaining first confidence values for the obtained one or more first intermediate results based on the processing, and assigning the obtained first confidence values to the obtained one or more first intermediate results. Additionally or alternatively, the obtaining the second data may comprise obtaining one or more second intermediate results from the processing of the second engineering data by at least one of the one or more selected processing tools, obtaining second confidence values for the obtained one or more second intermediate results based on the processing, and assigning the obtained second confidence values to the obtained one or more second intermediate results.

Hence , based on the confidence values, transparency is increased, understandability for the user is increased, and trust of the user into the results is increased. Additionally, low confidence values may hint the user at that further manual checking is needed for the respective aspect or content.

According to several examples of the present disclosure, the comprehensively analysing may be further based on checking for contradictions and/or optimisation potential among and/or across the one or more first intermediate results and the one or more second intermediate results. The checking for contradictions and/or optimisation potential may comprise at least one of:
- comparing at least part of the one or more first intermediate results and at least part of the one or more second intermediate results to each other, and
- comparing at least part of the first confidence values and at least part of the second confidence values to each other.

It shall be noted that the checking for contradictions and/or optimisation potential may be understood to comprise comprehensively analysing the one or more first intermediate results and the one or more second intermediate results separately from each other, and that the checking for contradictions and/or optimisation potential may further be understood to comprise comprehensively analysing both the one or more first intermediate results and the one or more second intermediate results together, i.e. across the one or more first intermediate results and the one or more second intermediate results.

Hence , due to the comparing and the additional obtainment of insights in relation therewith, alignment, consistency, reliability and accuracy of the intermediate results, of the results and of the structured representations are further increased.

According to several examples of the present disclosure, the comprehensively analysing may further comprise, if one or more contradictions and/or optimisation potentials are identified among the second data and/or among the one or more first intermediate results and the one or more second intermediate results, repeating the applying of the selected one or more processing tools on the first data under consideration of the identified one or more contradictions and/or one or more optimisation potentials.

It shall be noted that by under consideration of the identified one or more contradictions and/or one or more optimisation potentials it may be meant that the identified one or more contradictions and/or one or more optimisation potentials may be used as input for the repeating, so that the LLM-based autonomous agent knows about the identified one or more contradictions and/or one or more optimisation potentials when performing the repeating.

It shall be noted for reasons of understandability that the applying of the selected one or more processing tools is not hard-coded, but orchestrated by the LLM-based autonomous agent, for example according to the LLM-based autonomous agent's understanding of "contradictions" (or of "consistencies").

Hence, due to the repeating, contradictions may be at least reduced and optimisation potentials may be exploited more efficiently.

According to several examples of the present disclosure, the method may further comprise repeating the applying, the obtaining and the comprehensively analysing until a predetermined analysing criterion is met. The predetermined analysing criterion may be at least one of:
- the result of the comprehensively analysing is contradiction free and/or comprises no more optimisation potential,
- a predetermined maximum number of iterations is reached,
- a predetermined minimum amount of contradictions is reached, and
- a predetermined minimum amount of optimisation potential is reached, for example in case a predetermined minimum optimisation potential threshold value is reached.

Hence, due to the criterion, an efficient comprehensively analysing is achieved.

According to several examples of the present disclosure, the obtaining of the third data may comprise, if the result of the comprehensively analysing is obtained based on the predetermined analysing criterion being met, combining the second data into a consistent context based on a predetermined alignment mechanism; and generating the structured representation from the consistent context.

It shall be noted that by consistent context is may be meant that, e.g., the processed/extracted content from first data (e.g., a P&ID) does not contradict (i.e., is consistent with) the processed/extracted content from second data (e.g., a CN). Particularly, this may mean that the information extracted from first data can be extended by what is extracted from second data, but this should not lead to an inconsistency (e.g., the P&ID seems to show that tank X is *directly* connected to valve A at the input, but the CN describes that there is an additional component (e.g., a controller) in between the valve A and the tank X).

Hence , due to the consistent context, a more reliable and more accurate structured representation may be obtained.

According to several examples of the present disclosure, the method may further comprise providing at least one of the following information to a user:
- the one or more intermediate results to a user,
- the one or more intermediate results assigned with confidence values to a user,
- a course of the obtaining of the first data to a user,
- a course of the obtaining of the second data to a user,
- a course of the obtaining of the third data to a user,
- a course of the selecting the one or more processing tools,
- a course of the applying the selected one or more processing tools, and
- a course of the comprehensively analysing.

Additionally or alternatively, the providing may be based on a logging functionality for workflow and/or data processing of the LLM-based autonomous agent for providing the user with the information.

It shall be noted that the information provided to the user may be understood as transparency-improving information or as traceability-improving information, which may improve transparency and/or traceability for the user regarding the orchestrating and/or the controlling and/or the processing of the LLM-based autonomous agent.

Hence , transparency as well as traceability is increased and trust of the user into the obtained data and/or results is further increased.

According to several examples of the present disclosure, the method may further comprise receiving user feedback on the provided information; and performing and/or repeating at least one of the following based on the received user feedback:
- fine-tuning the large language model-based autonomous agent,
- fine-tuning the one or more selected processing tools,
- the obtaining the first data,
- the selecting the one or more processing tools,
- the applying the selected one or more processing tools,
- the obtaining the second data,
- the comprehensively analysing, and
- the obtaining the third data.

Hence , due to the user feedback, a quality of the obtained data and/or results is further increased and may be made more adequate to specific situation, for example to specific types of engineering projects.

According to several examples of the present disclosure, the method may further comprise further applying the LLM-based autonomous agent provided with the access to further orchestrate by the LLM-based autonomous agent the following based on the domain knowledge representation: planning achievement of a goal indicative of obtaining a structured representation from data which the LLM-based autonomous agent obtains; and performing and/or repeating at least one of the following based on the planning:
- the selecting the one or more processing tools,
- the applying the selected one or more processing tools,
- the obtaining the second data,
- the comprehensively analysing, and
- the obtaining the third data.

It shall be noted that the planning may comprise that the LLM-based autonomous agent plans autonomously (based on its language-based analysis and understanding of the first/second data/(interim)/results and the domain knowledge representation and the available tools) several processing steps to be performed in order to potentially achieve a predetermined goal. The planning of the LLM-based autonomous agent may be improved by training or fine-tuning (for example training may not necessarily be needed in case a LLM is used) of the LLM-based autonomous agent.

According to several examples of the present disclosure, for training the LLM-based autonomous agent (the LLM-based autonomous agent system), an LLM (which is to act as the LLM-based autonomous agent) may be trained or fine-tuned or prompted, for example with few-shot prompting, to specify its plan for problem solving or result generation by outputting a string.

Hence, automatization is further improved and further and/or more suitable and more target-oriented support is provided to the user. Thus, specific tool use for a specific domain (like Oil&Gas vs. Mining for example) may be indicated.

According to several examples of the present disclosure, the orchestrating by the LLM-based autonomous agent may further comprise reflecting and/or self-reflecting on the obtaining of the second data and/or on the obtaining of the third data based on the goal to achieve. Additionally or alternatively, the orchestrating by the LLM-based autonomous agent may further comprise further processing and/or providing the second data and/or the third data based on a result of the reflecting and/or the self-reflecting.

It shall be noted that the reflecting and/or self-reflecting may comprise that the LLM-based autonomous agent may compare the processing it has performed in comparison to a processing it has planned prior to the processing. In case the LLM-based autonomous agent may determine that it has deviated from its planned processing by more than a predetermined deviation amount, for example in that one or more tools were not used or not used as planned, the LLM-based autonomous agent may adapt its processing to a result of the reflecting or self-reflecting, for example a not used tool will be used.

Hence, due to the self-reflecting and/or the reflecting, comprehensiveness, consistency, contradiction-freeness, accuracy and reliability of the obtained data as well as of the obtained structured representations is further increased.

According to a second aspect, there is provided a data processing apparatus for comprehensive engineering data processing in industrial plant. The data processing apparatus comprising a processor being configured to carry out the method of the first aspect.

The data processing apparatus according to the second aspect is advantageous in that it may participate in enabling to process an entire set of data from a respective engineering project in order to obtain a comprehensive and consistent output of all contained information, just as a human engineering expert would do. Hence, the data processing apparatus takes into consideration the outputs from different expert models, like for example from one for images like P&IDs and from one for text like CNs, and combines them into one bigger context, while having access to and staying consistent with suitable underlying expert domain knowledge representation.

According to a third aspect, there is provided a data processing system for comprehensive engineering data processing in industrial plant. The data processing system comprising the data processing apparatus of the second aspect, and/or the data processing system comprising means for carrying out the method of the first aspect.

The data processing system according to the third aspect is advantageous in that it may participate in enabling to process an entire set of data from a respective engineering project in order to obtain a comprehensive and consistent output of all contained information, just as a human engineering expert would do. Hence, the data processing system takes into consideration the outputs from different expert models, like for example from one for images like P&IDs and from one for text like CNs, and combines them into one bigger context, while having access to and staying consistent with suitable underlying expert domain knowledge representation.

According to a fourth aspect, there is provided an industrial plant comprising a data processing apparatus of the second aspect and/or a data processing system of the third.

By "industrial plant", according to several examples, it may be meant an industrial plant or industrial production plant comprising one or more pipelines, production lines and/or assembly lines for transforming one or more educts into a product and/or for assembling one or more components into a final product. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling to process an entire set of data from a respective engineering project in order to obtain a comprehensive and consistent output of all contained information, just as a human engineering expert would do. Hence, the industrial plant takes into consideration the outputs from different expert models, like for example from one for images like P&IDs and from one for text like CNs, and combines them into one bigger context, while having access to and staying consistent with suitable underlying expert domain knowledge representation.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling to process an entire set of data from a respective engineering project in order to obtain a comprehensive and consistent output of all contained information, just as a human engineering expert would do. Hence, the computer-readable medium takes into consideration the outputs from different expert models, like for example from one for images like P&IDs and from one for text like CNs, and combines them into one bigger context, while having access to and staying consistent with suitable underlying expert domain knowledge representation.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling to process an entire set of data from a respective engineering project in order to obtain a comprehensive and consistent output of all contained information, just as a human engineering expert would do. Hence, the computer program product takes into consideration the outputs from different expert models, like for example from one for images like P&IDs and from one for text like CNs, and combines them into one bigger context, while having access to and staying consistent with suitable underlying expert domain knowledge representation.

According to a seventh aspect, there is provided a use of a data processing apparatus of the second aspect, and/or of a data processing system of the third aspect, and/or of an industrial plant of the fourth aspect.

The use according to the seventh aspect is advantageous in that it may participate in enabling to process an entire set of data from a respective engineering project in order to obtain a comprehensive and consistent output of all contained information, just as a human engineering expert would do. Hence, the use takes into consideration the outputs from different expert models, like for example from one for images like P&IDs and from one for text like CNs, and combines them into one bigger context, while having access to and staying consistent with suitable underlying expert domain knowledge representation.

Optional features of the first aspect may form part of any of the second to seventh aspects, mutatis mutandis.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates an agent system;
- Figure 2 illustrates a system according to several examples of the present disclosure;
- Figure 3 illustrates a flowchart indicative of a method according to several examples of the present disclosure; and
- Figure 4 shows a block diagram schematically illustrating a data processing apparatus according to several examples of the present disclosure.

### DETAILED DESCRIPTION

In the context of the Engineering Data Processing Funnel (for illustration purposed, comprising for example that several input data are processed to obtain one output data, i.e. the several input data are input to a "funnel", which outputs the one output data), different kinds of engineering design specifications data, e.g., Engineering, Procurement and Construction (EPC) or end-customer data, from various engineering projects, for example like greenfield for the time being and like brownfield later, will be processed. Such different kinds of data may comprise P&IDs, Control Narratives and IO/Tag Lists for example, just to name a few. For greenfield, the data can come in freshly, for brownfield, the data can come in as a P&ID with changes highlighted for example.

There is a goal to obtain from such unstructured input data a structured representation of content contained in these unstructured input data. For example, the to be obtained structured representation may be in the format of a graph, for example in OWL format or RDF format, or any other kind of structured, hierarchical format, like for example XML-based or JSON-based. In order to automatically process the unstructured input data to obtain a structured representation, large artificial intelligence/machine learning (AI/ML) models, many of them very likely based on the transformer architecture, are very likely the best choice.

Processing single engineering project data one-by-one, however, does not yield a full picture, and a lot of information would be lost or left unconsidered if the data was not processed in its entirety, but was processed in such a one-by-one process. In a case where several data, like different data files, are available and are associated with a same single engineering project, the one-by-one process may be understood to represent a processing of each one of these different data files one after the other and independently from each other, i.e. in a one-by-one process. Hence, each data, piece of data or data file is processed alone or exclusively. Hence, there may be the risk that a lot of information would be lost or left unconsidered. For example, insights from a cross-analysis among different data files would not be obtained. Additionally or alternatively, in a case where data is available, is associated with a same single engineering project, and comprises several different types of information, like for example an image with text (i.e. image-based information and textural-based information, for example), the one-by-one process may be understood to represent a processing of each one of these different types of information one after the other and independently from each other, i.e. in a one-by-one process. Hence, each type of information is processed alone or exclusively. Hence, there may be the risk that a lot of information would be lost or left unconsidered. For example, insights from a cross-analysis among different types of information would not be obtained.

In view thereof, processing the entire set of data from a respective engineering project will make sense and is advantageous (in comparison to a one-by-one process) in order to obtain a comprehensive and consistent output of all contained information, just as a human engineering expert would do for the respective engineering project. In order for this, there is needed a (more sophisticated) data processing system, which may take into consideration the outputs from different expert models, like for example one expert model for images like P&IDs and one expert model for text like CNs, and which combines these outputs into one bigger context, while having access to suitable underlying expert domain knowledge representation. While having the access, the data processing system may stay consistent with the suitable underlying expert domain knowledge representation. According to several examples of the present disclosure, there is described a suitable setup for such data processing system.

According to several examples of the present disclosure, there is provided a system and a method for the comprehensive engineering data processing, wherein in the following, the system (and the method, accordingly) is outlined in more detail.

The system may be based on an autonomous agent or autonomous agent system, which manages the overall data processing, and as part of this, autonomously routes input data (like engineering project data for example) to suitable further-processing expert models and/or expert algorithms, as outlined below in detail. These "experts" can then in turn be executed for the actual input data and information processing and/or information transformation, for example in order to route an image input file towards an image processing expert model.

The system may be based on a mixture of such above-mentioned "experts", i.e. the system may be based on a "mixture of experts" (MoE), with expert ML/Al models and/or expert data processing algorithms. For example, one model like a Vision Transformer for example for processing images like P&IDs, and one model like a large language model (LLM) for example for processing text like CNs, and one algorithm like hard-coded if-else-Tree for example for processing tables like engineering IO/Tag lists.

The system may take into consideration (or the system may converge) obtained embedding representations and/or outputs from the different expert models (among the MoE).

The system may combine the obtained embedding representations and/or outputs into a bigger context or consistent context, i.e. an embedding representation, in order to thereon-based generate a structured or summarizing output. The consistency of such structured or summarizing output may be guaranteed by an underlying alignment mechanism. The underlying alignment mechanism can either be executed on the respectively processed data (processed by the respective expert(s)), or it can have been taken care of when training the multimodal embedding, e.g. by means of contrastive learning approaches, or similar.

When performing the above-outlined data processing, the system may have access to (and may stay consistent with) an underlying expert domain knowledge representation, for example in the form of a domain information model or a domain ontology, to control, guardrail, and/or direct the data processing and the output generation.

Moreover, the system may allow for a feedback mechanism, for logging for traceability and transparency, as well as may enable an I/O visualization for improved user understanding and user trust.

Through the agent wrapper, i.e. a wrapping by the autonomous agent around the above-indicated tools, the underlaying domain knowledge, and the MoE, the system has the capacity of planning, tool use, multi-tool-collaboration, and reflection. In doing so, the system may come up with a best possible result of a comprehensive, structured representation.

According to several examples of the present disclosure, the generated output may be used to populate the underlying knowledge representation ontology, i.e. concretely the ontological concepts for example, with instances, thus allowing to obtain from an entirety of EPC data or EPC information, i.e. from the set of different data and data modalities, a comprehensive and consistent representation or representation instantiation. In contrast thereto, it shall be noted that every single data or data file as such would possibly allow to extract partial information only, or would possibly even allow to extract unconfident, uncertain, and/or wrong information, if contexts are unclear for example.

According to several examples of the present disclosure, an output convergence expert model, which may likely be an LLM, an "Output Guardian LLM", can be set up at an end of a processing pipeline, to converge outputs from the "experts", and to self-reflect and/or maintain consistency for example, before outputting a final result of structured information from an Engineering Data Funnel to a user.

According to several examples of the present disclosure, the system may furthermore have a logging functionality, for both workflow and data processing, in order to provide the user, which may mainly be a human engineering expert, with informative updates on what the system is currently doing, which actions the system is taking and why the system is taking these action, and what intermediate results or intermediate data processing results the system has obtained. Hence, the user can follow the reasoning and step-by-step data processing of the system and of the expert models and/or expert algorithms.

According to several examples of the present disclosure, the system may furthermore have an output visualization functionality, for example in a user interface, UI, which may additionally enable the receiving and processing of feedback, like of user feedback for example, in order for a continuous improvement of the underlying system, of the expert models and/or expert algorithms, or of embedding representations or knowledge representation (i.e. of the structured representations). Like this, an initial set of models (and model checkpoints, for example along with their weights) and/or algorithms can be further or continuously further fine-tuned, for example by using techniques such as PEFT-LoRA, thus allowing an exchanging or updating of active model configurations through additional Low-Rank-Adapters (Wrappers).

According to several examples of the present disclosure, in the following, the system and the method for the comprehensive engineering data processing are outlined in more detail.

The system (and the method) is based on an autonomous agent system, which in the core can contain a LLM, and which may have the task to manage data processing, and as part of this, to autonomously route input data (like engineering project data for example) to further-processing expert models and/or expert algorithms. Hence, these "experts" can then in turn be executed for the input data and information processing, for example in order to route an image input file towards an image processing expert model. In this regard, it shall be noted that by "autonomous agent", it is meant a software, usually based on one or more LLMs, that can take a high-level direction, can autonomously decide on a complex sequence or combination of actions, and can execute it to deliver the outcome.

For example, such an autonomous agent can be implemented based on and using "langchain"'s Functions, Agents, Tools; for example provided open-source through "langchain" Python library.

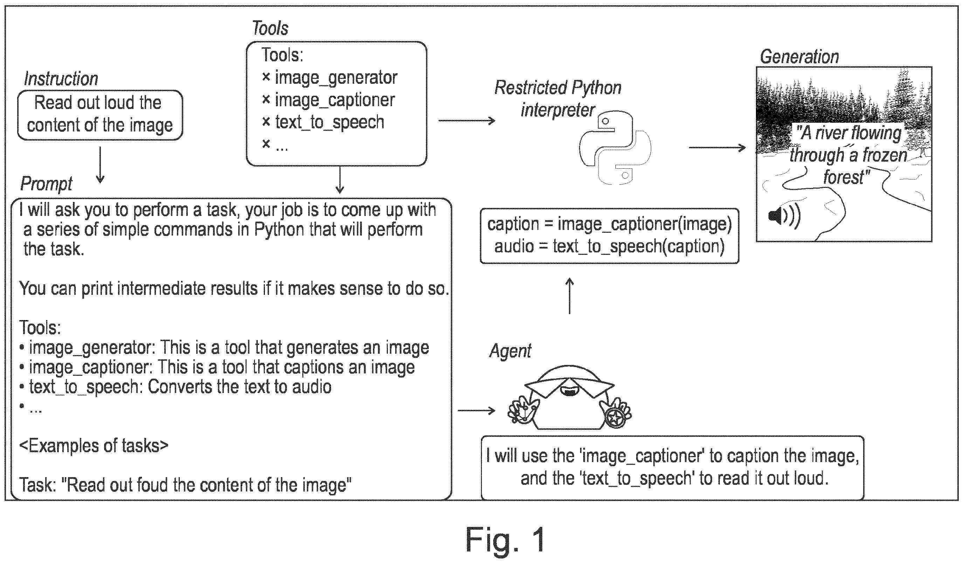

According to several examples of the present disclosure, an autonomous agent or autonomous agent workflow can comprise: Receive an instruction to process input data. Therefore, to select from a set of tools the most effective one(s) to achieve a predetermined goal. At least some of the tools in the set are described, for example by use of FAIR data principles for representation, so the autonomous agent can "understand" the tools' purposes and functionalities. Execute the selected tool(s) along with the input data, possibly even more than once. Explain and motivate intermediate steps of the executing and show and gather intermediate results of the executing. Bring such intermediate results together, like jointly analysing them or combining them, and decide on a next processing step(s) based on the intermediate results and/or based on a result of the bringing together (i.e. based on a result of the jointly analysing). Show and explain a final result(s) obtained from the bringing together, as the final result(s) resulting from an execution of the (sequence of) steps and/or tools. Figure 1 schematically illustrates an example (which is not P&AEng-related) provided by "Transformers Agent", wherein Figure 1 is from huggingface's "transformers" python library documentation and is meant to provide a very simple example and overview of what an agent system is, how it works, and what it can be used for. For example, (1) an instruction is transformed into (2) a prompt, being executed by (3) an agent, which has access to (4) tools, that can be executed (5) e.g. by means of a Python engine (for mere example only without providing any limitation or restrictions on the present disclosure), in order to eventually yield (6) the wanted output.

According to several examples of the present disclosure, the autonomous agent may presume and require that the tools and "experts" be described using a formal description method, which can be on any maturity level, e.g., from simple natural language, via Markup Text Description, or up to a mature Ontological Representation.

According to several examples of the present disclosure, the autonomous agent may preferably presume and utilize the same formal description also for the P&A Eng Domain, like for P&A Eng components, services, IOs, interrelations, connections, and tools, models, applications along with their functionalities, their parameters, their IOs for example. Such same formal description may comprise a FAIR data representation. Thus, the autonomous agent may be enabled to make use of MoE, for example for miscellaneous-modal data processing, and for automated, supported, and/or enhanced P&A Eng Data processing and analytics.

According to several examples of the present disclosure, the autonomous agent may have access to a set of "simple" data processing and storage tools, such as state-of-the-art document loaders, parsers, tokenizers, chunking methods, embedding methods and tools, vector store components vector indexing tools, etc. for example, provided open-source through "langchain" library or similar.

According to several examples of the present disclosure, the autonomous agent may have access to a domain knowledge representation database, the database containing for example relevant domain information models, like about mining or energy industries, consistent with ebase databases for example, or domain ontologies, like about the same, and/or related to the MTP standard / VDI 2658, or eBase format, or other proprietary vendor formats, for example.

According to several examples of the present disclosure, beyond the above-mentioned tools, the autonomous agent may have access to a Repository or Database of Ontology, Information Model, or Excel Adapters/Parsers, for example for different industries such as Mining, Oil&Gas, Food&Beverages, or Chemical and Refining, to extract concepts, e.g., to act as classification targets, to output schema targets, to guardrail, etc.

According to several examples of the present disclosure, the autonomous agent may have access to state-of-the-art Retrieval-Augmented-Generation (RAG) functionality, not only for documents, but in particular also for Knowledge Graphs or ontologies (KG-RAG), and other data representations (X-RAG).

According to several examples of the present disclosure, the autonomous agent may be based on a MoE, with expert ML/Al models and/or expert data processing algorithms, like one model (for example a Vision Transformer) for processing images like P&IDs and one model (for example an LLM) for processing text like CNs, for example, and one algorithm (for example hard-coded if-else-Tree) for processing tables like IO lists. It shall be noted that the experts can be ML/Al models or hard-coded traditional data processing algorithms. It shall be noted that each of these experts can be guided by the domain knowledge represented in the (above-mentioned) knowledge representation database.

According to several examples of the present disclosure, the Image processing tool or Object recognition and classification tool can classify the detected objects into a set of classes, which may be derived from a set of concepts in the domain ontology. Such detected objects may be understood as representing "classification targets".

According to several examples of the present disclosure, the Image processing tool or Object recognition and classification tool can make use of interrelations or connections as represented in the domain ontology, when in the P&ID two or more detected symbols, like a tank and a valve for example, are potentially (or potentially not) connected, in order to figure out whether or not these symbols can/may actually be connected, if there may be a relation in the ontology. Hence, the ontology can be used to reconfirm or boost confidence in the object detection and connection identification mechanism or disconfirm a connection which cannot be.

According to several examples of the present disclosure, the same for language or text transformers, etc., for example the text in a control narrative, like in a sentence, talks about two or three "things", "elements" or "entities" in a context, but only two of them can be related according to the ontology. Hence, the third "thing" must refer to a previous or next sentence for example.

According to several examples of the present disclosure, a database or repository of Low-Rank-Adapters (LoRA Adapters) for ML/Al models, can provide a set of industry-specific LoRA Adapters, which can be loaded and attached to a generic expert model, to act for example as a wrapper around expert models. Industry-specific LoRA Adapters could, after obtaining them for example through dedicated fine-tuning, represent the specific features or properties of data from the specific industry, such as Mining, Oil&Gas, Food&Beverages, or ChemRef for example.

According to several examples of the present disclosure, the MoE can come with several same-purpose-models for processing same data parallelly, and for thus becoming more confident with a generated output. This may be understood as a confidence-boosting functionality.

According to several examples of the present disclosure, same-purpose expert models can collaborate, for example, again via a routing functionality of the autonomous agent, and a result of such collaborating could be a weighted sum of different same-purpose expert model outputs, for example the average.

According to several examples of the present disclosure, the set of expert models in the MoE could also contain one or more commercial model(s), for example a future GPT5-Vision-Turbo, etc., if any of these commercial model(s) may perform better on some specific data or modality, for example on P&ID images, than customer-specified models for example.

According to several examples of the present disclosure, the autonomous agent may take into consideration or may converge an obtained embedding representation(s) and/or output(s) from the different expert models. The autonomous agent may combine these representation(s) and/or output(s) into one bigger context or consistent context (i.e. into one embedding representation) in order to thereon-based generate a structured or summarizing output, where a consistency may be guaranteed by an underlying alignment mechanism.

According to several examples of the present disclosure, such alignment mechanism may take care of aligning the data processing, foe example of different modalities like image, text, etc., and/or of an underlying ontology. Therefore, according to several examples of the present disclosure, it may be used Siamese NNs along with suitable loss functions or utilized the cross-attention-mechanism to directly help with multimodal data processing.

Alternatively or complementarily, according to several examples of the present disclosure, the (overall) transformer network and embedding can be suitably conditioned or trained using contrastive learning. For a given dataset of pairs of "similar" symbols, for example P&ID symbols, and/or their corresponding words or names in Control Narratives and/or their corresponding concept-names in the Ontology or information model, a neural network can be tuned to move similar "thing embeddings" together, and dissimilar "thing embeddings" apart.

According to several examples of the present disclosure, as already mentioned above, the domain information models and/or ontologies, which may be available in the knowledge representation database, can be used directly for class-names-extraction or derivation for multi-class-classification in the respective expert model(s).

According to several examples of the present disclosure, while additionally having access to (and staying consistent with) suitable underlying expert domain knowledge representation, for example in the form of a domain information model or a domain ontology, to steer or control, guardrail, and/or direct the data processing and output generation.

According to several examples of the present disclosure, through directing the content extraction and output representation generation towards information-model-contained or ontological-representation-contained concepts, there may be extracted engineering data file content and directed to output generation into the format of the Module Type Package (MTP) (VDI 2658), or similar.

According to several examples of the present disclosure, the generated output may be used to populate the underlying knowledge representation ontology, i.e. for example concretely the ontological concepts, with instances, thus allowing to obtain from the entirety of EPC data or information, i.e. from the set of different data and/or data modalities, a comprehensive and consistent representation or instantiation. In contrast thereto, every single data or data file would possibly allow to extract partial information only, or possibly even unconfident or uncertain information, if contexts are unclear for example.

According to several examples of the present disclosure, through the autonomous agent setup, a further example for an autonomous agent workflow may look as follows:
- Receive an instruction to process input data or first data indicative of input data, for example a P&ID and a CN.
- The autonomous agent or a LLM used by the autonomous agent then is to come up with a (likely multistep) plan to achieve a goal, for example to extract from the first data or from the input data all or at least part of content or information into a structured output format, which the LLM then executes.

- Therefore, select from a set of tools, wherein the tools are described so the autonomous agent/the LLM can "understand" the tools' purposes and functionalities, required one or more tools and/or the most effective one or more tools. For example, start with document loaders for image and text files or pdf files, parsers, tokenizers, embedders, and then use an image processing expert model as well as a text processing expert model.
- The autonomous agent/the LLM triggers to execute the selected one or more tools along with the first data or the input data, possibly more than once, possibly in parallel. In doing so, Multi-Tool Collaboration may be possible, for example in terms of several tools, and/or experts work together, split up big tasks into subtasks and steps, and/or plan the achievement of the goal. For example, thus obtaining structured outputs, for example in JSON formal or XML format (through another tool for example an OutputParser), listing objects that were recognized in the P&ID, what I/O they have, how they are respectively connected, and from the CN, what components are described, and what specifications they respectively have.
- Explain and motivate intermediate steps, and show and/or gather intermediate results or second data indicative of the intermediate results. For example, gather such two separate JSON/XML outputs as indicated above.
- Bring the intermediate results together, and decide on one or more next steps based on the intermediate results, for example based on a result of a joint processing of the second data or of the intermediate results. For example, gather the two separate JSON/XML outputs as indicated above, and have the autonomous agent, for example another LLM, run another model, for example another LLM, to analyze how these outputs can be brought together.
- Show and explain final results or third data indicative of final results, as resulting from execution of the (sequence of) steps and/or tools.
- Optionally, as part of the autonomous agent system setup, an output convergence expert model, likely a LLM, an "Output Guardian LLM" for example, can be set up at an end of the processing pipeline, to converge the outputs from experts, and to self-reflect or reiterate over a document or an expert model, to maintain consistency among the outputs for example, before giving back the final result of the Engineering Data Funnel to a user.

Hence, according to several examples of the present disclosure, through the autonomous agent wrapper around the tools, the underlaying domain knowledge, and the MoE, the system has the capacity of planning, tool use, multi-tool-collaboration, and reflection, in order to eventually come up with a best possible result.

According to several examples of the present disclosure, the system may furthermore have a suitable logging functionality, for both workflow and data processing, in order to provide a user, for example a human engineering expert, with informative updates:
- on what the system is currently doing,
- which actions the system is taking and why, and
- what intermediate data processing results the system has,
so the user can follow a main reasoning and a step-by-step data processing of the system and of the expert models and/or expert algorithms.

Such informative updates may allow to improve traceability and transparency, and hence may also allow to increase a trust in the system or in the result(s) output from the system. Such informative updates further allow the user or the developer of the system to easier find out, where the system, i.e. the autonomous agent, may have done something wrong. Moreover, like this, the system and its inner working, i.e. the system's inner step-by-step working, is also detectable.

According to several examples of the present disclosure, the system may furthermore have an output visualization functionality, for example in the user interface (UI), which may additionally enable the receiving and processing of user feedback, in order for a thus improvement or continuous improvement of the underlying overall system or expert models or embedding representations or knowledge representation. Like this, the initial set of models or model checkpoints, for example along with their weights, can be further or continuously further fine-tuned, for example by using techniques such as PEFT-LoRA, thus allowing the exchanging or updating of the respectively active model configuration(s) through additional Low-Rank-Adapters (Wrappers).

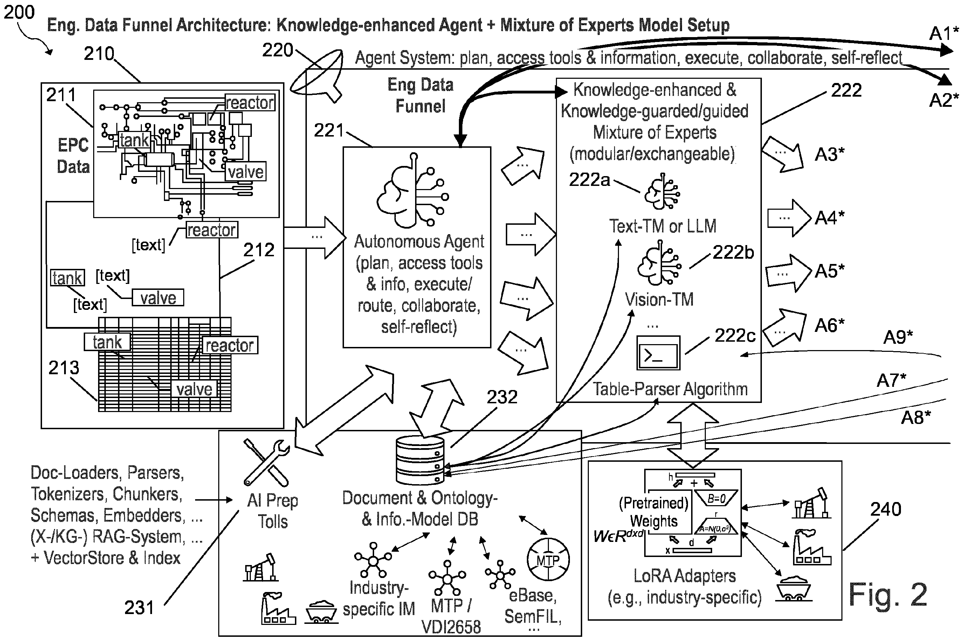

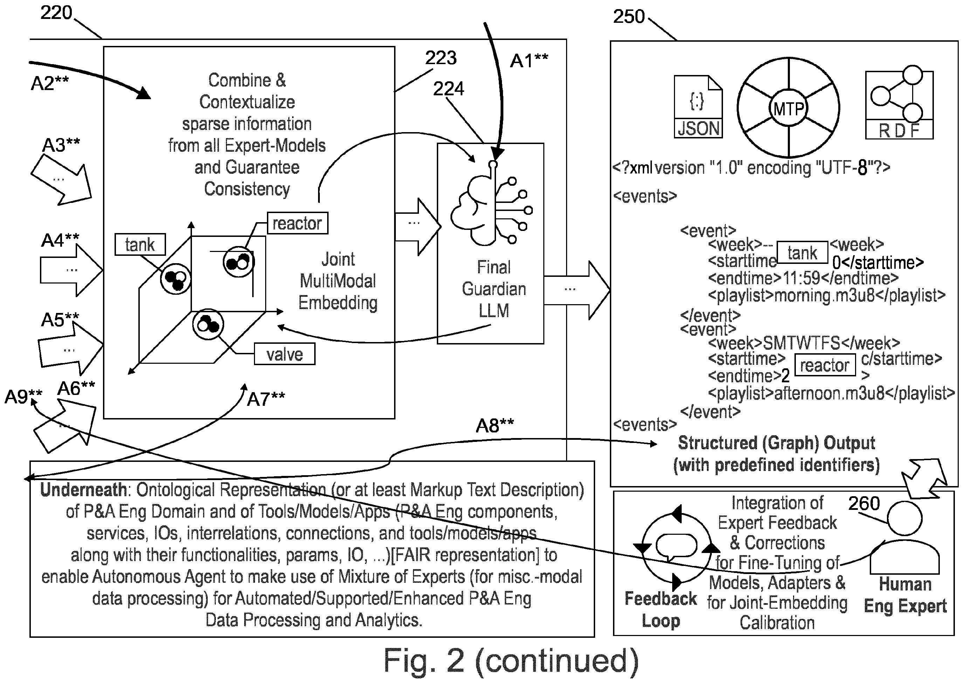

Figure 2 as shown in the drawing sheets is drawn over two sheets, i.e. sheets 2/4 and 3/4. In doing so, the arrows indicated with A1* and A2* on sheet 2/4 continue on sheet 3/4 as A1** and A2**, respectively. Further, the block arrows A3*, A4*, A5* and A6* on sheet 2/4 represent the block arrows A3**, A4**, A5** and A6** on sheet 3/4, respectively. Furthermore, the arrows indicated with A7*, A8* and A9* on sheet 2/4 continue on sheet 3/4 as A7**, A8** and A9**, respectively. The box indicating the Eng. Data Funnel 220 continues from sheet 2/4 to sheet 3/4.

Figure 2 schematically illustrates the overall system 200. For example, in a left part of Figure 2, EPC data 210 for one engineering project are schematically illustrated. The EPC data 210 comprises three different files or type of data, a first file (image file for example) 211 which shows a diagram (or P&ID), a second file (text file for example) 212 which comprises text (CN for example) and a third file (table file for example) 213 which comprises a table. It shall be noted that for reasons of visibility, it is indicated by the term "[text]" in the shown second file 212 in Figure 2 that text is included. In each of these three documents, a reactor, a tank and a valve are included, either based on a symbol in the image shown in the first file 211, or based on text in a plain text included in the second file 212, or based on an entry in a table in the third file 213. The EPC data 210, which may be understood to represent first data, are input to the Engineering Data Funnel 220, in particular to the autonomous agent 221. The autonomous agent 221 has access to several tools (artificial intelligence (Al) preparation tools in Figure 2) 231 and to several databases (Document & Ontology- & Information-Model Database in Figure 2) 232. The autonomous agent 221, based on the access to the tools 231 and the databases 232, selects one or more tools that are suitable to be applied on the first data or input data comprising the first file 211, the second file 212 and the third file 213. Thus, the autonomous agent 221 obtains a Mixture of Experts (MoE) 222, which comprises, for example, a Vision-Transformer-Model (Vision TM) 222b for analysing the first file 211, a Text-TM 222a for analysing the second file 212 and a Table-Parser Algorithm 222c for analysing the third file 213. The MoE 222 may be selected or set up under further consideration of LoRA Adapters 240. Thus, models and/or algorithms in the MoE 222 may be suitable for and/or preferrable for and/or predetermined for and/or preadjusted for a certain type of industry (for example Mining industry or Oil&Gas industry, ect.) to which the one engineering project belongs. For example, weights used in models or algorithms may be predetermined according to a specific industry. When the MoE 222 analyse the files 211 to 213, second data are obtained which are indicative of intermediate results from the analysing for example. Such intermediate results may be results to be obtained by the autonomous agent 221 from one model or algorithm during application of the one model or algorithm. For example, when applying the Text-TM 222a, the Text-TM 222a may analyse the second file 212 only once or several times, and may output a result for each analysation. Such result or results obtained at the MoE-level may be understood as representing an intermediate result or intermediate results. However, it shall be noted that the Text-TM 222a is not limited to be applied on the second file 212 only. Rather, in general, one model or algorithm in the MoE 222 may be applied on one or more data or data files from the EPC data 210. Similar, one data or data file from the EPC data 210 may be analysed by one or more models or algorithms in the MoE 222. For example, the Text-TM 222a may be used to analyse text in the first file 211 (in case there may be text available). The autonomous agent 221 may then generate, based on the second data, third data 223 indicative of a structured representation. For example, the autonomous agent 221 combines and contextualizes sparse information obtained from the MoE 222. In more detail, the autonomous agent 221 may comprehensively or jointly analyse the second data, i.e. the autonomous agent 221 may comprehensively analyse the intermediate results from the MoE 222. In doing so, contradictions may be identified and my further be removed. For example, the Vision-TM 222b applied on the first file 211 may give as an intermediate result that the tank may be directly connected with the reactor. From the Text-TM 222a being applied on the second file 212 however, an intermediate result may be obtained which outlines that the tank must not be directly connected with the reactor, but that there has to be a valve connected between the tank and the reactor. A similar intermediate result with a non-direct connection between the tank and the reactor may be obtained from analysing the third file 213 for example. Therefore, the autonomous agent 221 knows that there may be a contradiction regarding the intermediate result obtained from the Vision-TM 222b applied on the first file 211. Hence, with such additional knowledge or insight as boundary condition for example, the autonomous agent 221 may reapply the Vision-TM 222b on the first file 211 and/or may correct the intermediate results obtained from the Vision-TM 222b accordingly. Hence, in doing so, the autonomous agent 221 may guarantee for consistency in data combination and/or data contextualization, based on predetermined or available consistency criteria. The third data 223 may be indicative of or comprise a Joint MultiModal Embedding representation of the original input data's content (i.e. of the first data content). The third data 223 may then be input to a LLM (Final Guardian LLM in Figure 2) 224, which the autonomous agent 221 may then use to generate a structured representation 250 from the third data, and may output the structured representation 250 to a user, for example a Human Engineering Expert 260. Hence, the autonomous agent 221 may be understood as an LLM-based autonomous agent 221. The user is further enabled to give user feedback, for example on the structured representation and/or on one or more of the intermediate results, i.e. on the processing and/or analysing of the MoE 222. For example, as indicated in Figure 2, user feedback may be integrated into a feedback loop for fine-tuning of models (or of adapters and for joint-embedding calibration) in the MoE 222.

It shall be noted that in machine learning, an embedding is a low-dimensional vector representation of a high-dimensional data point. It's a way to represent data in a space where similar items are closer together and dissimilar items are farther apart. This process involves mapping each data point to a point in a continuous vector space. Embeddings are commonly used in natural language processing (NLP), computer vision, and other domains where data is inherently high-dimensional.

For example, in natural language processing, words can be represented as dense vectors in an embedding space where words with similar meanings are close to each other. This allows machine learning models to capture semantic relationships between words and generalize better across different tasks.

A (joint) multimodal embedding is a representation that combines information from multiple modalities, such as text, images, audio, or any other type of data. It's a way to unify different types of information into a single vector space, where relationships between data points from different modalities can be captured.

For instance, in a multimodal embedding space, there could be images of cats and corresponding text descriptions both mapped to nearby points if they're both about cats. This allows machine learning models to understand and reason about relationships between different modalities of data.

According to several examples of the present disclosure, a usage of the described system 200 could be intended according to the following two approaches:
- Access the "Engineering Data Funnel" 220 via an API/Menu from, for example a Web App UI or via a REST-ful interface, or from one of established automation engineering tools, such as "Orchestration Designer", the Control Builder M, Automation Studio, Freelance Engineering, Process Graphic Editor, eBase, or the "café Tool", etc. It shall be noted that also other tools may be connected or that the outcome may be provided to other tools, for example for electrical data or for simulation tools or for testing.
- Access remote or local via a function call to the "Engineering Data Funnel" Backend, on a Server, via a Web-API, with secure data processing or encryption, for example using two-key-system.

Besides the actual EPC data (or EPC engineering data) 210 (i.e. one or more documents), a user may also add additional information to the provided EPC data 210 via the UI, for example which industry is concerned, like process industries (PI) or energy industries (EN) for example, or even which business, like Mining, O&G, Chemistry and Refining for example, so that with this knowledge, the system 200 can either directly address or direct the data processing request to a suitable expert (or to a tool along with a suitable industry/business-specific LoRA wrapper around a multipurpose model), or fine-tune experts for future utilization.

According to several examples of the present disclosure, in the following, overall requirements for the autonomous agent-based system 200 to be facilitated are given. For example, a markup description + formal representation of PAEng domain and tools (of plants, components, services, functionalities, I/O, parameters, interrelations, key performance indicators (KPIs), tools plus tools repository, use cases, I/O, etc.) to enable analytics or enhanced analytics by means of an autonomous agent or an AI agent.

According to several examples of the present disclosure, in the following, examples of agent activity and corresponding logging outputs are given, which comprise planning, routing, accessing tools and information (for example method calls with method signatures with args/kwargs (arguments and keyword arguments)), collaborate (with tools), self-reflect, self-criticize, staying consistent with the underlaying ontology/ information model, iterate, make conclusions, show interim and final results, etc.

According to several examples of the present disclosure, information for a user of the system 200 about the autonomous agent's processing are outlined by use of several non-limiting examples. The autonomous agent 221 may communicate with a user as follows:
Hello, I'm your helpful Engineering Data Funnel assistant agent!

I am going to process the data you provide to me as input, and keep you informed of what I'm doing step-by-step, e.g.,
- what plan I have to try process your files and using which tools,
- what resulting (interim) outputs I have obtained, and
- how I will have them further processed, etc.
- until I obtain the final result, which I will provide to you.

I will continuously monitor the data processing, and I will reflect whether or not this still fits to the initial plan or goal and to the given restrictions (e.g., the domain information model).

In case something unforeseen happens, or something is not consistent anymore, I will inform you about updates to my plan, to best mitigate the situation, and to work further towards achieving the task's fulfilment.

For all data processing, I have access to the following set of tools (and their respective formalized functionality descriptions):
- "unstructured-data-structurization-tool": ...
- "image-object-recognition-tool": ...
- "image-ocr-tool": ...
- "text-processing-tool": ...
- "table-extraction-tool": ...
- "ontology-extraction-tool": ...
- "RAG-tool": ...
- "JSON-output-parser-tool": ...

Particularly, for (self-)reflection, I have access to the following tool:
- "criticizer-tool": ...

According to several examples of the present disclosure, a sample input given to the Engineering Data Funnel 220 is illustrated as an example:
- A P&ID image/pdf file, and
- a Control Narrative (CN) pdf file
for 1 new-to-be-built engineering project.

According to several examples of the present disclosure, the LLM-based autonomous agent 221 may be given the following prompt (task) by a user:
I want you to process the provided unstructured engineering data and extract the contents from these into a structured list (a JSON object), listing all components mentioned, along with their unique identifiers/tags, what properties they have, and how they are possibly linked (referring to other unique identifiers).

In response, the autonomous agent 221 may communicate to the user:
I provide you with a sample JSON output for a single sample component as part of a greater topology: < SAMPLE_JSON_OUTPUT (extract; per "1 object" detected/identified) >

According to several examples of the present disclosure, the LLM-based autonomous agent 221 may be given the following prompt (task) by a user:
Your job is to come up with a plan to solve the task by means of a series of steps of simple Python commands, which execute tools and process data.

Then, perform the plan, i.e., execute the steps one after the other.

Here, after each step, reflect on what you have achieved, and whether or not this still fits to the original plan, or whether you have to re-plan in order to achieve the goal. For performing the tasks, you have access to the following tools, listed below along with a short description of what the respective tool can do, what I/O it consumes/produces, and what optional parameters can be set:
< LIST_OF_TOOLS >

For reflection, make use of the criticizer-tool:
< CRITICIZER-TOOL >

Please keep me informed on every step you do (by means of short printouts to console and to a log file):
For example (the user may select at least one of the following):
- Inform me about your initial plan.
- Inform me about the respective step you execute (what Python command you will execute, using which tool, and justify why you think executing this command with this tool makes sense).
- Print out intermediate results, if it makes sense to do so.
- Reflect, if the (intermediate) result(s) seem to be correct and consistent with other so-far-obtained results, and keep me informed about how you proceed in any case.
- Keep in mind, to provide certainty/confidence information for all outputs (as indicated in the sample JSON output format), and always ground the processed data with respect to the domain information model / ontology.

According to several examples of the present disclosure, the LLM-based autonomous agent 221 may be given the following prompt (task) by a user:
Below, you find some sample tasks, along with the steps to achieve the overall goal of obtaining structured outputs from the input files.

E.g., when given only a CN, then extract all components and named-entities along with their tags and properties or features, and then save them in a structured/hierarchical JSON file.

E.g., when given only a P&ID, then extract all symbols along with their tags/IDs and along with their connections to other symbols (which again have tags/IDs), and then save all this in a structured/hierarchical JSON file.

E.g., when given a CN and a P&ID, then not only extract from the CN all named-entities along with their tags and properties or features, but also additionally extract from the P&ID all symbols along with their tags and along with their connections. For both of these sub tasks, keep in mind consistency with the domain ontology. Save both results in a structured, hierarchical JSON file. Additionally, merge these two separately extracted contents and check for overall consistency. If you find contradicting contents, annotate this with the respective part of the result and further iterate in order to eliminate contradiction as long as you can find and resolve any.

Generally, for each task, provide certainty/confidence information for all components, entities, and features, you have identified, and save them in the respective field in the structured JSON output.

Generally, for each task, combine & contextualize sparse information from all tools (expert-models) and try to maintain overall consistency through grounding your results with respect to the provided domain information model or ontology!

See further below for a sample execution and associated console/logging outputs.

According to several examples of the present disclosure, an output from the autonomous agent 221, for example the above-indicated < SAMPLE JSON OUTPUT (extract; per "object" detected/identified) > may comprise the following information:

### <JSON>

### Components

```
   - ID/Tag: RE001
          - Type: hp-reactor
                  - Confidence:
                         - Single-expert confidence: float-value in %
                         - Single-expert confidence (ontology-enhanced): float-value in %
                         - Multi-Expert average confidence: float-value in % (average value
                             of single-expert values)
                         - Contradictions/Inconsistencies:
                                 - type: lp-reactor
                  - Properties:
                         - Capacity: 150 L
                         - Fill-Level:
                                 - Min: 20 L
                                 - Max: 120 L
                  - Connections:
                         - Input:
                                 - ID/Tag: LC004 (level controller)
                                 - ID/Tag: Pump002
                         - Output:
                                 - ID/Tag: PC009 (pressure controller)
                                 - ID/Tag: Tank037
          - Type: lp-reactor
                  - Confidence: ...
                  - Properties: ...
                  - Connections: ...
   - ID/Tag: LC004
          - Type: Level controller
```

According to several examples of the present disclosure, a list of tools (< LIST OF TOOLS >) may comprise a set of tools and their respective formalized (simple/atomic) functionality descriptions, i.e., a description of what the respective tool can do, what I/O a tool consumes or produces, and what optional parameters can be set for the tool. The list of tools may comprise one or more of the following examples:
- "unstructured-data-structurization-tool": This tool extracts and transforms data (in miscellaneous file formats) into clean consistent JSON, which is ready for chunking, embeddings, and integration e.g. into a vector database. It therefore extracts and normalizes a document and enriches the extracted information with metadata. Among others, it uses techniques for document image analysis, including layout detection and vision transformers, to extract and understand the content of PDFs, images, and tables.
- I/O may be any file // JSON.
- "image-object-recognition-tool": This tool is for image object recognition. It provides a list of objects and their respective bounding boxes, particularly for images with objects in the P&A Eng domain, e.g., P&IDs, SCDs, etc. If provided additionally with an ontology (with a set of classes & instances), it will make use of YOLO-X (or similar) algorithm(s) for multi-class-classification, and also detect connections (e.g., edges in the P&IDs) between the identified objects.

This tool can optionally make use of the "image-ocr-tool", too, in order to additionally also identify IDs/Tags along with the detected symbols.
- I/O maybe an image file // detected_objects_list, bounding_boxes_list, tags_list, connections list.
- "image-ocr-tool": This tool is for optical character recognition. It can identify characters, words, or numbers in image files (such as document scans or P&IDs), and transform these into further processable text or identifiers.
- I/O may be an image, detected_objects_list, bounding_boxes_list, connections_list // tags_list.
- "text-processing-tool": This tool is for processing (semi-clean) text data. It can embed text information into abstract embedding representations, or extract e.g. named entities. If provided additionally with a distinct identifier (e.g. an ontological concept), then it can extract information from the text about this pre-defined concept, such as how this concept is related to other things mentioned in the text or what properties this concept has according to the text.
- "table-extraction-tool": This tool is for processing (semi-clean) tabular data (e.g. real tables, or tables in markup style, etc.). It can embed the tabular data into abstract embedding representations. If provided additionally with a distinct identifier (e.g. an ontological concept), then it can extract information from the tabular data about this pre-defined concept, such as what additional features (e.g., in rows/columns or in cross-references) this concept has.
- "ontology-extraction-tool": This tool is for mining ontological data, such as ontology files (e.g. in owl format) or knowledge graphs (e.g. in RDB or graph DBs). It can be used, e.g., for extraction of classes from an ontology for later multi-class-classification (e.g. by means of an "image-object-recognition-tool").
- "RAG-tool": This tool is for facilitation of retrieval-augmented generation. It can facilitate standard RAG, KG-RAG (e.g. to work with ontological information or KGs), etc.
- "JSON-output-parser-tool": This tool makes sure that the output is proper JSON; no only format-wise, but optionally also according to a predefined JSON schema (into which it fills the parameters).

According to several examples of the present disclosure, regarding reflection or self-reflection of the autonomous agent 221, a user may give the following task to the autonomous agent 221, for example through the "criticizer-tool".

E.g., when you have two tools that do the same thing, then use both, to obtain results, and then compare results. Reflect if they differ, extend each other, or contradict each other. And if they contradict each other, then explain why, and which piece of information is likely correct, and which is wrong. Provide confidence information where you can (e.g., ontological confirmation).

E.g., when you have two tools that process data from different modalities but about the same "thing" (for example identified by means of the unique tag/ID), then compare the results, reflect if they differ, contradict, or extend each other, and if they differ or contradict, then explain why, and which is correct, or provide confidence information.

For every tool, if a domain information model (e.g., an ontology) is provided, then ground and justify the extracted information based on the ontology.

According to several examples of the present disclosure, an obtained result may be as follows.

If the image-object-recognition-tool finds 10 objects in the P&ID, and, e.g., one was identified as either an HP Reactor (85% certainty/confidence) or an LP Reactor (15% certainty/confidence), then it may be checked in the ontology, if, e.g., both or only one of these Reactors is/are actually eligible in the concerned domain (e.g., Oil & Gas vs. Mining), or what I/O connections these Reactors would have (be allowed to have, according to the information provided in the ontology). Then, if the detected symbol has two input connections and one output connection for example, and only the LP Reactor is represented in the IM to have so, too (whereas the HP Reactor has only one input and one output), then, even though the HP Reactor had a higher probability (85% in comparison to 15%), the HP Reactor can be ruled out in comparison to the LP Reactor, thanks to the ontology enhancement.

According to several examples of the present disclosure, the autonomous agent 221 may add such certainty or confidence values (or uncertainty quantification(s)) to respective component's information in a structured output. In the above example, this would mean, that the "single-expert confidence" will be 85% in simple and will be 0% in ontology-enhanced for the HP Reactor, and will be 15% in simple and will be 100% in ontology-enhanced for the LP Reactor. Hence, reflection or self-reflection on output(s), i.e. result(s) or intermediate result(s) obtained by the autonomous agent 221, for example after some additional information has been obtained from another tool, and after this has been found to be inconsistent with a previous output, may lead to repeated execution of a probabilistic tool.

According to several examples of the present disclosure, there is provided in the following an exemplary execution and console output / logging Information.

```
   agent = initialize_agent( chain = data_proc_into_JSON )
   agent.bind_tools( tools_list = [ tool1, tool2, ..., toolN ] ) # see
   list above!
   result = agent.run(
       command = """Process the given input document(s), under
   consideration of the given context, into a structured list of
   things in JSON format.""", # see more elaborate Prompt above!
       document_list = [ doc1, doc2, ..., docN],
       context = [ paeng_ontology ],
       verbosity = True,
   )
```

It shall be noted that the processing at the autonomous agent 221 may be started by the above-outlined command.

```
   ==Explanation from the agent==
   You provided me with two input files, doc1 and doc2.
   Looking at doc1, you provided me with a jpg file, which is an image
   file.
   I assume this is an engineering-related image file (like a P&ID).
   I will use the following tool: 'image_object_detection' to identify
   from the image the contained objects and how they are linked.
   I case I find text, I will also make use of the 'ocr_tool', in
   order to extract the texts or tags that are associated with objects
   in the image.
```

It shall be noted that the autonomous agent 221 gives feedback to a user about the input filed and about how the autonomous agent 221 plans to process these input files.

```
   ==Code generated by the agent==
   temp_result1 = image_object_detection(
                           image = doc1_image,
                           context = paeng ontology,
                           iteration_plan = None,
                      )
   ==Question to user==
   Do you want me to execute this code in the provided save sandboxed
   Python environment? Yes/No
   >>> Y
   ==Output from the agent==
   ... Executing ...
   20%|.................................................
   ..........................................................|
   [00:00<00:10, 10.54it/s]
   95%|
                                                                   .......|
   [00:09<00:10, 10.54it/s]
   SUCCESS.
   ==Result==
   Using the tool "image_object_detection", I have the following
   interim result:
   "'temp_result1.json'"
   JSON
   Components
   - ID/Tag: RE001
       - Type: hp-reactor
              - Confidence:
                     - Single-expert confidence: 85%
                     - Single-expert confidence (ontology-enhanced):
                  0%
                     - Multi-Expert average confidence: 0%
              - Contradictions/Inconsistencies:
                     - type: lp-reactor
              - Properties:
                     - Capacity: 150 L
                     - Fill-Level:
                             - Min: 20 L
                             - Max: 120 L
              - Connections:
                     - Input:
                             - ID/Tag: LC004 (level controller)
                             - ID/Tag: Pump002
                     - Output:
                             - ID/Tag: PC009 (pressure controller)
                             - ID/Tag: Tank037
       - Type: lp-reactor
              - Confidence:
                     - Single-expert confidence: 15%
                     - Single-expert confidence (ontology-enhanced):
                  100%
                     - Multi-Expert average confidence: 100%
              - Properties: ...
              - Connections: ...
   - ID/Tag: LC004
   - ID/Tag: ...
```

It shall be noted that the autonomous agent 221 outputs intermediate results showing potentially identified objects. For example, based on using the image_object_detection' tool alone, the autonomous agent 221 identified an object to be either a High Pressure (HP) Reactor by a certainty of 85% or a Low Pressure (LP) Reactor by a certainty of 15%. This may be a result obtained from the autonomous agent 221 exclusively analysing the first file 211 as illustrated in Figure 2. However, when considering ontology, for example when considering intermediate results obtained through a different (selected) model or algorithm applied on the same or a different input file, the results from the object identification may need to be adapted. For example, based on an ontology-enhanced analysation, the certainty for the identified object being the HP Reactor is reduced from 85% to 0%, and the certainty for the identified object being the LP Reactor is increased from 15% to 100%. For example, the autonomous agent 221 may have obtained from such second file 212 and/or third file 213 as illustrated above with reference to Figure 2 that, for one certain engineering project, there must not be a HP Reactor.

```
==Question to user==
   Do you want me to continue? Yes/No
   >>> Y
   ==Explanation from the agent==
   Having processed doc1, I will continue with doc2.
   Looking at doc2, you provided me with a pdf file.
   A pdf file can contain all sorts of contents, e.g., texts, tables,
   images, etc.
   I will first use the following tool: 'unstructured-data-
   structurization' in order to extract and transforms the contained
   data into clean consistent JSON, which is then ready for chunking,
   embeddings, and integration e.g. into a vector database.
   ==Code generated by the agent==
   jsonified_doc2 = unstructured-data-structurization(file=doc2)
   ==Question to user==
   Do you want me to execute this code in the provided save sandboxed
   Python environment? Yes/No
   >>> Y
   ==Output from the agent==
   ... Executing ...
   20%| ........................
   ..........................................................|
   [00:00<00:13, 10.54it/s]
   95%|
                                                                           .......... |
   [00:11<00:13, 10.54it/s]
   SUCCESS.
   ==Result==
   Using the tool "unstructured-data-structurization", I have the
   following interim result:
   [...]
   ==Question to user==
   Do you want me to continue? Yes/No
   >>> Y
   ==Explanation from the agent==
   I have found that the jsonified content contains text and tables.
   I will therefore first continue to process the jsonified content
   using the following tool 'text-processing-tool' for the text parts,
   and later use the following tool 'table-processing-tool' for the
   tables.
```

It shall be noted that the autonomous agent 221 applies two tools on one input file.

```
   ==Code generated by the agent==
   temp_result? = text_processing(
                           input = jsonified_doc2,
                           context = paeng ontology,
                           iteration_plan = None,
                      )
   ==Question to user==
   Do you want me to execute this code in the provided save sandboxed
   Python environment? Yes/No
   >>> Y
   ==Output from the agent==
   ... Executing ...
   [...]
   [...]
   [...]
   ==Explanation from the agent==
   I have now processed all input files you provided for once.
   I will now comprehensively analyze the obtained outputs, and
   reflect on the contents.
   For example, I will check for overall consistency with the provided
   domain information model (context = paeng_ontology).
   For example, I will check for possible contradictions between the
   interim results from different tools.
   Etc.
```

It shall be noted that the autonomous agent 221 performs a comprehensive analysation.

```
   ==Code generated by the agent==
   iteration_plan = self_critique_own_results(
                               original_input = [ doc1, doc2 ],
                               generated_result = [temp_result1,
   temp_result2, ... ],
                               context = paeng ontology,
                              prompt = "Criticize the generated result(s).
   Check for consistency with the provided ontological information
   model and make a proposal on how and where to improve it. Check for
   possible contradictions between the interim results from different
   tools and make a proposal on how and where to correct them."
                        )
   ==Question to user==
   Do you want me to execute this code in the provided save sandboxed
   Python environment? Yes/No
   >>> Y
   ==Output from the agent==
   ... Executing ...
   [...]
   ==Result==
   I have found several inconsistencies with the domain information
   model.
   I have found several possible contradictions between the interim
   results from the different tools.
   ==Explanation from the agent==
   First, I propose to re-use the tool 'image object detection', along
   with the information on components and their associated
   uncertainties that I have obtained from the tool 'text_processing'.
   [...]
   ==Code generated by the agent==
   iteration plan = [ "Criticize the provided result, check for
   consistency with provided ontological information model or other
   interim results, and make proposal on how and where to improve
   it.", ]
   iter_result1 = image_object_detection(
                           image = doc1_image,
                           context = paeng_ontology,
                           iteration_plan = iteration_plan[0], )
   ==Question to user==
   Do you want me to continue? Yes/No
   >>> Y
   ==Output from the agent==
   ... Executing ...
   [...]
   ==Result==
   [...]
   [...]
   REPEAT WHILE iteration_plan != None
```

It shall be noted that, here, the autonomous agent 221 may performs a comprehensive analysation with several iterations.

According to several examples of the present disclosure, for training the LLM-based autonomous agent system or system 200, an LLM (which is to act as the autonomous agent 221) may be trained or fine-tuned or prompted, for example with few-shot prompting, to specify its plan for problem solving or result generation by outputting a string like:

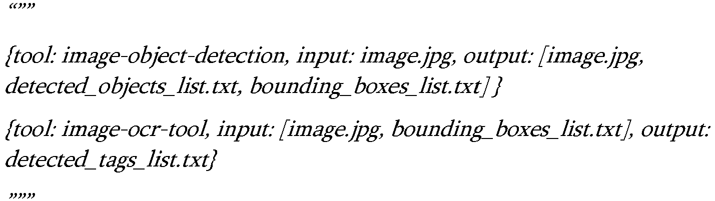

Optionally, it may be asked to additionally output also corresponding code snippets, which it could optionally trigger to be executed, too, like:

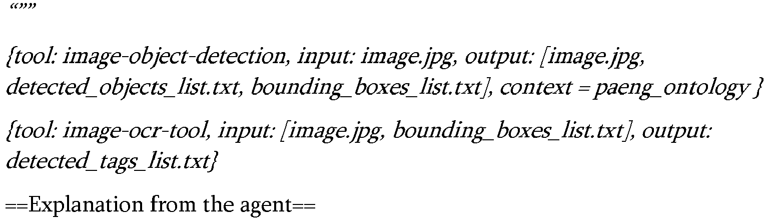

I will use the following tool: 'image_object_detection' to detect objects in the image.

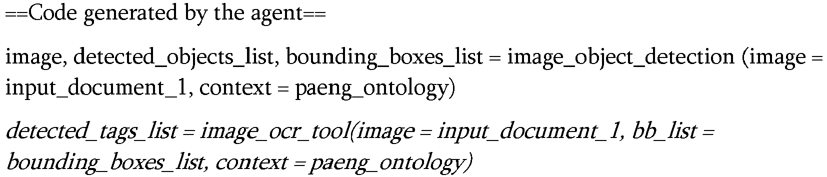

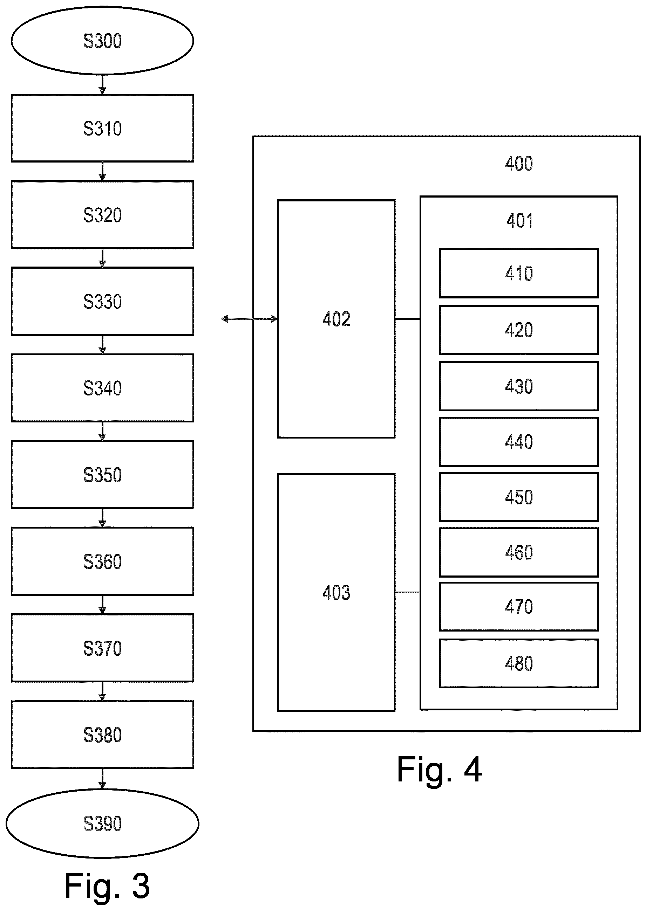

Referring now to Figure 3, Figure 3 illustrates a flowchart indicative of a method according to several examples of the present disclosure. The method is a method for comprehensive engineering data processing in industrial plant according to several examples of the present disclosure.

The method according to Figure 3 may be applied at such autonomous agent 221 as shown with reference to Figure 2.

The method starts in S300.

In S310, the method comprises providing to a large language model-based, LLM-based, autonomous agent 221 access to domain knowledge representation 231 associated with one engineering project.

In S320, the method comprises applying the LLM-based autonomous agent 221 provided with the access to orchestrate by the LLM-based autonomous agent 221 at least the following based on and/or in alignment with the domain knowledge representation.

In S330, the method comprises obtaining first data indicative of engineering data 211, 212, 213 associated with the one engineering project.

In S340, the method comprises based on one or more types of information provided in the engineering data 211, 212, 213 and/or based on a type of the one engineering project, selecting one or more processing tools 222a, 222b, 222c for processing the first data.

In S350, the method comprises applying the selected one or more processing tools 222a, 222b, 222c on the first data.

In S360, the method comprises based on the applying, obtaining second data indicative of one or more intermediate results from a processing of the first data by the selected one or more processing tools 222a, 222b, 222c.

In S370, the method comprises comprehensively analysing the second data based on checking for contradictions and/or optimisation potential among the second data.

In S380, the method comprises based on a result of the comprehensively analysing, obtaining third data indicative of a structured representation 250 of the first data.

The method ends in S390.

The comprehensively analysing the second data may comprise comprehensively analysing the first data and the second data.

Referring now to Figure 4, Figure 4 shows a block diagram schematically illustrating a data processing apparatus 400 according to several examples of the present disclosure. In particular, according to several examples of the present disclosure, there is provided a data processing apparatus 400 for comprehensive engineering data processing in industrial plant. The data processing apparatus 400 comprising a processor 401 being configured to carry out the method of Figure 3.

In more detail, according to various examples, a data processing apparatus 400 being configured to carry out the method of Figure 3 may comprise a processing circuitry, a processing function, a processing means, a processing unit or a processor 401, which enables the data processing apparatus 400 to participate in comprehensive engineering data processing in industrial plant. The processor 401 may comprise one or more processing portions or functions, wherein the processing portions or functions may be provided as one or more physical or virtual entities. The data processing apparatus 400 may comprise one or more communication interfaces 402. The data processing apparatus 400 may further comprise a memory or memory unit 403 for storing data, programs and/or instructions to be executed by the processor. The memory 403 may be a memory internal to the data processing apparatus 400 or may be a memory external to the data processing apparatus 400, for example at a cloud server. The processor 401 may comprise one or more portions, which enable the data processing apparatus 400 to execute the method of Figure 3, for example. According to several examples of the present disclosure, a providing portion 410 may be configured to perform such providing according to S310 of Figure 3, an applying portion 420 may be configured to perform such applying according to S320 of Figure 3, an obtaining portion 430 may be configured to perform such obtaining according to S330 of Figure 3, a selecting portion 440 may be configured to perform such selecting according to S340 of Figure 3, an applying portion 450 may be configured to perform such applying according to S350 of Figure 3, an obtaining portion 460 may be configured to perform such obtaining according to S360 of Figure 3, a comprehensively analysing portion 470 may be configured to perform such comprehensively analysing according to S370 of Figure 3, and an obtaining portion 480 may be configured to perform such obtaining according to S380 of Figure 3.

According to several examples of the present disclosure, there is provided a data processing system for comprehensive engineering data processing in industrial plant. The system comprising a data processing apparatus 400 as outlined above with reference to Figure 4. Additionally or alternatively, the system comprises means for carrying out the method of Figure 3.

The data processing system may be such system 200 as outlined above with reference to Figure 2.

According to several examples of the present disclosure, there is provided an industrial plant comprising a data processing apparatus 400 as outlined above with reference to Figure 4. Additionally or alternatively, the industrial plant comprising the system 200 as outlined above with reference to Figure 2.

According to several examples of the present disclosure, there is provided a computer-readable medium comprising instructions which, when executed by a computing system, causes the computing system to perform the method of Figure 3. The computer-readable medium may be transitory or non-transitory, volatile or non-volatile.

According to several examples of the present disclosure, there is provided a computer program product comprising instructions which, when executed by a computing system, enable or cause the computing system to perform the method of Figure 3. The computer program product may comprise a computer-readable medium comprising instructions of the computer program product.

According to several examples of the present disclosure, there is provided a use of a data processing apparatus 400 as outlined above with reference to Figure 4, and/or of the system 200 as outlined above with reference to Figure 2, and/or of an industrial plant as outlined above.

The method according to Figure 3 may be computer implemented.

Optional features of the method according to Figure 3 may form part of any of the data processing apparatus 400, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for comprehensive engineering data processing in industrial plant, the method comprising:
providing (S310) to a large language mopdel-based, LLM-based, autonomous agent (221) access to domain knowledge representation (231) associated with one engineering project; and
applying (S320) the LLM-based autonomous agent (221) provided with the access to orchestrate by the LLM-based autonomous agent (221) at least the following based on and/or in alignment with the domain knowledge representation (231):
obtaining (S330) first data indicative of engineering data (211, 212, 213) associated with the one engineering project;
based on one or more types of information provided in the engineering data (211, 212, 213) and/or based on a type of the one engineering project, selecting (S340) one or more processing tools (222a, 222b, 222c) for processing the first data;
applying (S350) the selected one or more processing tools (222a, 222b, 222c) on the first data;
based on the applying, obtaining (S360) second data indicative of one or more intermediate results from a processing of the first data by the selected one or more processing tools (222a, 222b, 222c);
comprehensively analysing (S370) the second data based on checking for contradictions and/or optimisation potential among the second data; and
based on a result of the comprehensively analysing, obtaining (S380) third data indicative of a structured representation (250) of the first data.

2. The method according to claim 1,
wherein the engineering data are first engineering data provided in a first data file,
wherein the first data are further indicative of second engineering data provided in a second data file, the second engineering data associated with the same one engineering project as the first engineering data, and
wherein the selecting comprises selecting one or more processing tools for processing the first data based on at least one of:
- a data type of the first data file,
- a data type of the second data file,
- one or more types of information provided in the first engineering data,
- one or more types of information provided in the second engineering data, and
- a type of the same one engineering project.

3. The method according to claim 1 or 2,
wherein the type of the one engineering project comprises at least one of:
mining,
oil and gas,
food and beverages, and
chemicals and refining;
wherein the one or more types of information comprises at least one of:
a text,
a table,
an image, and
time series data;
wherein the data type comprises at least one of:
a proprietary format,
a user-specific format,
a PDF-file,
an XML-file,
a JSON-file, and
a JPG-file.

4. The method according to any of claims 1 to 3,
wherein the selecting the one or more processing tools comprises selecting the one or more processing tools from among preselected processing tools; and/or
wherein the selecting the one or more processing tools is further based on obtaining application and compatibility information about the preselected processing tools; and/or
wherein the selecting the one or more processing tools further comprises configuring a selected processing tool according to the one or more types of information provided in the first and/or second engineering data and/or according to the type of the one engineering project.

5. The method according to any of claims 1 to 4, wherein the applying the selected one or more processing tools on the first data comprises
applying at least one of the selected one or more processing tools on at least one of the first engineering data and the second engineering data,
the applying based on at least one of
a type of information provided in the first engineering data,
a data type of the first data file,
a type of information provided in the second engineering data,
a data type of the second data file, and
a type of the one engineering project.

6. The method according to any of claims 1 to 5, wherein the obtaining the second data comprises
obtaining one or more first intermediate results from the processing of the first engineering data by at least one of the one or more selected processing tools, obtaining first confidence values for the obtained one or more first intermediate results based on the processing, and assigning the obtained first confidence values to the obtained one or more first intermediate results; and/or
obtaining one or more second intermediate results from the processing of the second engineering data by at least one of the one or more selected processing tools, obtaining second confidence values for the obtained one or more second intermediate results based on the processing, and assigning the obtained second confidence values to the obtained one or more second intermediate results.

7. The method according to any of claims 1 to 6,
wherein the comprehensively analysing is further based on checking for contradictions and/or optimisation potential among and/or across the one or more first intermediate results and the one or more second intermediate results,
wherein the checking for contradictions and/or optimisation potential comprises at least one of
- comparing at least part of the one or more first intermediate results and at least part of the one or more second intermediate results to each other, and
- comparing at least part of the first confidence values and at least part of the second confidence values to each other.

8. The method according to any of claims 1 to 7, wherein the comprehensively analysing further comprises,
if one or more contradictions and/or optimisation potentials are identified among the second data and/or among the one or more first intermediate results and the one or more second intermediate results,
repeating the applying of the selected one or more processing tools on the first data under consideration of the identified one or more contradictions and/or one or more optimisation potentials.

9. The method according to claim 8, further comprising repeating the applying, the obtaining and the comprehensively analysing until a predetermined analysing criterion is met, the predetermined analysing criterion being at least one of
- the result of the comprehensively analysing is contradiction free and/or comprises no more optimisation potential,
- a predetermined maximum number of iterations is reached,
- a predetermined minimum amount of contradictions is reached, and
- a predetermined minimum amount of optimisation potential is reached.

10. The method according to any of claims 1 to 9, wherein the obtaining of the third data comprises,
if the result of the comprehensively analysing is obtained based on the predetermined analysing criterion being met,
combining the second data into a consistent context based on a predetermined alignment mechanism; and
generating the structured representation from the consistent context.

11. The method according to any of claims 1 to 10, further comprising providing at least one of the following information to a user:
the one or more intermediate results to a user,
the one or more intermediate results assigned with confidence values to a user,
a course of the obtaining of the first data to a user,
a course of the obtaining of the second data to a user,
a course of the obtaining of the third data to a user,
a course of the selecting the one or more processing tools,
a course of the applying the selected one or more processing tools, and
a course of the comprehensively analysing;
and/or wherein the providing is based on a logging functionality for workflow and/or data processing of the LLM-based autonomous agent for providing the user with the information.

12. The method according to claim 11, further comprising
receiving user feedback on the provided information; and
performing and/or repeating at least one of the following based on the received user feedback:
fine-tuning the large language model-based autonomous agent,
fine-tuning the one or more selected processing tools,
the obtaining the first data,
the selecting the one or more processing tools,
the applying the selected one or more processing tools,
the obtaining the second data,
the comprehensively analysing, and
the obtaining the third data.

13. The method according to any of claims 1 to 12, further comprising further applying the LLM-based autonomous agent provided with the access to further orchestrate by the LLM-based autonomous agent the following based on the domain knowledge representation:
planning achievement of a goal indicative of obtaining a structured representation from data which the LLM-based autonomous agent obtains, and
performing and/or repeating at least one of the following based on the planning:
the selecting the one or more processing tools,
the applying the selected one or more processing tools,
the obtaining the second data,
the comprehensively analysing, and
the obtaining the third data.

14. The method according to any of claims 1 to 13, wherein the orchestrating by the LLM-based autonomous agent further comprises,
reflecting and/or self-reflecting on the obtaining of the second data and/or on the obtaining of the third data based on the goal to achieve; and
further processing and/or providing the second data and/or the third data based on a result of the reflecting and/or the self-reflecting.

15. A data processing apparatus (221) for comprehensive engineering data processing in industrial plant, the data processing apparatus comprising a processor being configured to carry out the method of any of claims 1 to 14.

16. A computer-readable medium comprising instructions which, when executed by a computing system, cause the computing system to perform the method of any of claims 1 to 14.

17. A computer program product comprising instructions which, when executed by a computing system, enable and/or cause the computing system to perform the method of any of claims 1 to 14.
